# DEMANDE DE BREVET EUROPEEN

(11) **EP 4 675 374 A1**
(43) Date de publication de la demande: **07.01.2026**
(21) Numéro de dépôt: 24186153.3
(22) Date de dépôt: 03.07.2024
(51) Int. Cl.: G04B 17/06, G04D 3/00, G04D 7/10, G04D 7/12, A44C 27/00, B23Q 17/12, B23Q 17/20, G01H 13/00, B23Q 15/02, G04D 3/02, G01N 29/12

(54) **PROCÉDÉ D'USINAGE D'UNE PIÈCE HORLOGÈRE OU DE JOAILLERIE**

(71) Demandeur: Richemont International S.A., 1752 Villars-sur-Glâne (CH)
(72) Inventeur: SOOBBARAYEN, Kévin, 25560 La Rivière-Drugeon (FR); JAN, Yannick, 25300 Pontarlier (FR)
(74) Mandataire: Novagraaf International SA

(57) **Abrégé**

L'invention concerne un procédé d'usinage d'une pièce horlogère ou de joaillerie (20) par découpe de matière, comprenant les étapes consistant à :
- se munir d'un substrat support (10),
- positionner ou brider le substrat support (10) dans une machine-outil,
- usiner au moins partiellement la pièce horlogère ou de joaillerie (20),
- appliquer une excitation vibratoire à la pièce horlogère ou de joaillerie (20) encore attachée au substrat support (10),
- mesurer une réponse vibratoire de la pièce horlogère ou de joaillerie (20), pour déterminer au moins une caractéristique d'une fréquence de résonance,
- fournir ladite au moins une caractéristique de fréquence de résonance à une machine de prédiction d'usinage pour déterminer ou modifier au moins une étape d'usinage à effectuer avant de terminer la pièce horlogère ou de joaillerie (20).

## Description

### Domaine technique de l'invention

La présente invention concerne de manière générale un procédé d'usinage d'une pièce horlogère ou de joaillerie, et en particulier, l'invention se rapporte à un procédé d'usinage d'une pièce horlogère ou de joaillerie par enlèvement matière (par exemple avec enlèvement de copeaux), ou comprenant une étape de découpe de matière.

### État de la technique

Dans l'art antérieur des procédés d'usinage, il est courant de faire des mesures des pièces, usinées ou en cours d'usinage, pour contrôler la conformité au cahier des charges de fabrication. De telles mesures sont typiquement effectuées avec ou sans contact. En contrepartie, de telles mesures peuvent imposer des contraintes dans le processus de fabrication (arrêt de production, prélèvement, attente du résultat de mesure...), et/ou sont impossibles à réaliser à certaines étapes de l'usinage, en particulier avant la finition de la pièce horlogère ou de joaillerie. De plus, certains paramètres peuvent être difficiles (voire impossibles) à mesurer directement ou simplement (par exemple une inertie, une densité...), même à des étapes intermédiaires de la fabrication.

### Exposé de l'invention

Un but de la présente invention est de répondre aux inconvénients de l'art antérieur mentionnés ci-dessus et en particulier, tout d'abord, de proposer un procédé d'usinage d'une pièce horlogère ou de joaillerie par découpe de matière dans un substrat support qui permette de contrôler ou mesurer aisément des paramètres ou des dimensions particulières d'une pièce horlogère ou de joaillerie, même avant que la pièce horlogère ou de joaillerie soit terminée et/ou détachée de son substrat support.

Pour cela, un premier aspect de l'invention concerne un procédé d'usinage d'une pièce horlogère ou de joaillerie par découpe de matière, comprenant les étapes consistant à :
- se munir d'un substrat support,
- positionner ou brider le substrat support dans une machine-outil,
- usiner au moins partiellement la pièce horlogère ou de joaillerie dans le substrat support avec au moins une étape de découpe de matière effectuée par des moyens de coupe,
- appliquer une excitation vibratoire à la pièce horlogère ou de joaillerie encore attachée au substrat support,
- mesurer une réponse vibratoire de la pièce horlogère ou de joaillerie encore attachée au substrat support, pour déterminer au moins une caractéristique d'une fréquence de résonance,
- fournir ladite au moins une caractéristique de fréquence de résonance à une machine de prédiction d'usinage pour déterminer ou modifier au moins une étape d'usinage à effectuer avant de terminer la pièce horlogère ou de joaillerie.

Selon la mise en oeuvre ci-dessus, une étape consistant à appliquer une excitation vibratoire à la pièce horlogère ou de joaillerie est effectuée en cours de fabrication, avec la pièce horlogère ou de joaillerie encore attachée au substrat support (par exemple un barreau dans lequel est usinée la pièce horlogère ou de joaillerie). Cette étape est effectuée avant que la pièce horlogère ou de joaillerie ne soit terminée et détachée, si bien qu'il est possible très en amont de déterminer une caractéristique (une dimension, une masse, une inertie...) de la pièce horlogère ou de joaillerie à ce stade de fabrication. En fonction d'une comparaison de la caractéristique déterminée avec une caractéristique attendue, il est possible d'adapter le reste de l'usinage : détacher la pièce horlogère ou de joaillerie, ou usiner encore la pièce horlogère ou de joaillerie, ou même prévoir un processus personnalisé pour terminer la pièce horlogère ou de joaillerie en question, avec une gamme de fabrication dédiée (comprenant des étapes, des dimensions, des tolérances dédiées à la pièce horlogère ou de joaillerie qui vient d'être testée encore attachée à son substrat support). On peut noter que l'attache de la pièce horlogère ou de joaillerie au substrat support procure naturellement un encastrement de référence qui permet au reste de la pièce horlogère ou de joaillerie d'entrer en vibration lors de l'excitation vibratoire.

Le procédé peut être défini par les caractéristiques suivantes, prises individuellement ou en combinaison.

Selon un mode de réalisation, ladite au moins une étape de découpe de matière effectuée par des moyens de coupe ou ladite au moins une étape d'usinage déterminée ou modifiée et à effectuer avant de terminer la pièce horlogère ou de joaillerie, comprend un déplacement relatif entre un vecteur d'usinage (un outil d'usinage) et la pièce à usiner. Autrement dit, ladite au moins une étape de découpe de matière effectuée par des moyens de coupe ou ladite au moins une étape d'usinage déterminée ou modifiée et à effectuer avant de terminer la pièce horlogère ou de joaillerie, comprend un suivi de trajectoire entre un point d'usinage et la pièce à usiner.

Selon un mode de réalisation, ladite au moins une étape de découpe de matière effectuée par des moyens de coupe ou ladite au moins une étape d'usinage déterminée ou modifiée et à effectuer avant de terminer la pièce horlogère ou de joaillerie, est au moins l'une de :
- une étape de tournage ou de décolletage (avec typiquement un mouvement de rotation relative entre l'outil de coupe et le substrat support, (ou de l'outil de coupe par rapport au substrat support), le substrat support étant par exemple un barreau),
- une étape de fraisage (avec typiquement l'enlèvement de matière sous forme de copeaux résultant de la combinaison de deux mouvements : la rotation de l'outil de coupe, d'une part, et l'avancée de la pièce à usiner (ou de l'outil de coupe) d'autre part),
- une étape de découpe laser,
- une étape de découpe jet d'eau,
- une étape de poinçonnage,
- une étape consistant à détacher la pièce horlogère ou de joaillerie de son substrat support, cette étape n'étant pas la dernière étape avant de terminer la pièce : on peut prévoir un ébavurage, un traitement de surface...

Selon un mode de réalisation, en fonction d'une comparaison de la caractéristique déterminée avec une caractéristique attendue, on peut prévoir de déclencher une alerte ou l'émission d'un message vers un opérateur.

Selon un mode de réalisation, si la comparaison de la caractéristique déterminée avec une caractéristique attendue donne un résultat conforme ou attendu, on peut prévoir l'émission d'un message de conformité.

Selon un mode de réalisation, si la comparaison de la caractéristique déterminée avec une caractéristique attendue donne un résultat non-conforme ou en dehors d'un résultat attendu, on peut prévoir l'émission d'un message de non-conformité, et/ou l'émission d'un message invitant à stopper l'usinage ou à contrôler la pièce usinée ou une usure d'outil, ou un réglage machine.

Selon un mode de réalisation, la machine de prédiction d'usinage peut déterminer une étape consistant à mettre la pièce horlogère ou de joaillerie au rebut.

Selon un mode de réalisation, la détermination ou la modification de ladite au moins une étape d'usinage à effectuer avant de terminer la pièce horlogère ou de joaillerie, comprend :
- la détermination d'une dimension finale à obtenir pour la pièce horlogère ou de joaillerie, et/ou
- la détermination d'une avance, ou d'une profondeur, ou d'une vitesse, d'usinage ou de coupe à appliquer pour terminer la pièce horlogère ou de joaillerie, et/ou
- la détermination d'une masse finale ou d'une inertie selon un axe spécifique à obtenir pour la pièce horlogère ou de joaillerie, et/ou
- la détermination d'une zone spécifique à usiner de la pièce horlogère ou de joaillerie, et/ou
- de manière complémentaire, la détermination d'un traitement à appliquer à la pièce horlogère ou de joaillerie, tel qu'un traitement par revêtement, un traitement chimique ou un traitement thermique, et/ou
- de manière complémentaire, la détermination d'une masse ou d'une dimension d'un insert ou d'un composant à joindre à la pièce horlogère ou de joaillerie.

Selon un mode de réalisation, la ou les étape(s) consistant à :
- appliquer une excitation vibratoire à la pièce horlogère ou de joaillerie encore attachée au substrat support,
- mesurer une réponse vibratoire de la pièce horlogère ou de joaillerie encore attachée au substrat support, pour déterminer au moins une caractéristique d'une fréquence de résonance
- fournir ladite au moins une caractéristique de fréquence de résonance à une machine de prédiction d'usinage pour déterminer ou modifier au moins une étape d'usinage à effectuer avant de terminer la pièce horlogère ou de joaillerie,
est (sont) effectuée(s) :
- en temps réel lors de l'étape d'usinage, et/ou
- de manière séquentielle, en interrompant l'étape d'usinage et/ou
- de manière simultanée à l'étape d'usinage. Ces modes de fonctionnement ne s'excluent pas nécessairement. En particulier, au cours de l'usinage d'une même pièce, on peut prévoir :
- une phase au cours de laquelle au moins une partie des étapes d'excitation / de mesure / de prédiction est effectuée de manière séquentielle, en interrompant l'étape d'usinage,
- une phase au cours de laquelle au moins une partie des étapes d'excitation / de mesure / de prédiction est effectuée simultanément à l'étape d'usinage, en temps réel.

Selon un mode de réalisation, l'excitation est une excitation vibratoire variable au cours du temps. Selon un mode de réalisation, l'excitation vibratoire variable au cours du temps est prévue pour couvrir une plage fréquentielle prédéterminée.

Selon un mode de réalisation, ladite au moins une caractéristique d'une fréquence de résonance est une fréquence d'un pic de résonance.

Selon un mode de réalisation, la plage fréquentielle du spectre obtenu ne dépend pas que de la source d'excitation vibratoire mais aussi du capteur de l'instrument de mesure utilisé. Ainsi, la plage fréquentielle est liée à la fois à la plage fréquentielle d'excitation et à la plage fréquentielle sur laquelle l'appareil de mesure de l'amplitude d'oscillation (vibromètre ou autre) est sensible. Cependant, la plage fréquentielle d'excitation sera choisie de sorte à inclure au moins une fréquence de résonance de la pièce horlogère ou de joaillerie.

Selon un mode de réalisation, la fréquence de résonance peut être une fréquence propre cible ou une fréquence de résonance cible, ou une plage de fréquence propre cible, ou une plage de fréquence de résonance cible définies par une tolérance autour d'une valeur cible. En tout état de cause, la fréquence de résonance que doit présenter la pièce horlogère ou de joaillerie est fonction ou représente une caractéristique ou un paramètre à mesurer (une dimension, une inertie, une densité...). En particulier, la demanderesse s'est aperçue que l'on pouvait très précisément corréler le moment d'inertie, des dimensions de la pièce horlogère ou de joaillerie avec au moins une fréquence de résonance observée lors de la mise en vibration de la pièce horlogère ou de joaillerie encore attachée à son substrat support lors de l'usinage.

Dans le procédé ci-dessus, la caractéristique d'une fréquence de résonance est une caractéristique de la réponse oscillatoire mesurée sur une plage fréquentielle prédéterminée, comprenant au moins une fréquence de résonance. Une telle caractéristique est typiquement identifiée après traitement d'un signal brut de mesure (par exemple mesure des amplitudes ou vitesses ou accélérations de déplacement de certains points de l'élément inertiel ou de l'ébauche d'élément inertiel), le traitement pouvant inclure par exemple une transformée de Fourier pour identifier des pics de résonance et donc des fréquences de résonance.

Selon un mode de réalisation, la plage fréquentielle est prédéterminée pour englober au moins une plage de fréquences :
- centrée sur la fréquence de résonance prédéterminée, et
- d'une étendue d'au moins 30% de la fréquence de résonance prédéterminée, c'est-à-dire ±15% de la fréquence de résonance prédéterminée. Par exemple, si la fréquence de résonance prédéterminée est de 20 kHz, alors la plage fréquentielle ira de 17000 Hz à 23000 Hz.

Selon un mode de réalisation, la pièce horlogère ou de joaillerie encore attachée doit présenter au moins deux fréquences de résonance prédéterminées, et l'excitation vibratoire appliquée à la pièce horlogère ou de joaillerie est prévue pour recouvrir lesdites au moins deux fréquences de résonance prédéterminées. En couvrant ou balayant une large plage de fréquences, on peut mesurer plusieurs pics de résonance (ou fréquences de résonance), ce qui peut apporter une meilleure précision.

Selon un mode de réalisation, l'étape d'excitation vibratoire comprend l'utilisation d'une source d'excitation vibratoire, telle qu'une source piézo-électrique, permettant d'induire ou imposer une excitation acoustique sur la pièce horlogère ou de joaillerie encore attachée au substrat support.

Selon un mode de réalisation, la source d'excitation vibratoire peut être une source acoustique accouplée à un cône d'excitation choisi pour exciter la pièce horlogère ou de joaillerie encore attachée au substrat support. Préférentiellement, la source acoustique peut être accouplée à un cône d'excitation choisi pour exciter au moins une partie de la pièce horlogère ou de joaillerie encore attachée au substrat support.

Selon un mode de réalisation, la source acoustique peut être choisie et/ou réglée pour générer l'excitation vibratoire variable au cours du temps pour couvrir la plage fréquentielle prédéterminée :
- avec une amplitude suffisante pour générer des vibrations de la pièce horlogère ou de joaillerie encore attachée au substrat support d'amplitude suffisante pour être détectées par le moyen de mesure d'amplitude ou de vitesse ou d'accélération de déplacement d'au moins un point de la pièce horlogère ou de joaillerie encore attachée au substrat support et/ou
- pendant une durée suffisante pour en déduire des spectres vibratoires de la pièce horlogère ou de joaillerie encore attachée au substrat support.

Selon un mode de réalisation, l'étape d'excitation vibratoire comprend l'utilisation d'une source d'excitation vibratoire, telle qu'un pot vibrant avec bobine traversée par un courant électrique et placée dans un champ magnétique. On peut prévoir un amplificateur électronique de forte puissance nécessaire à l'alimentation de la bobine, un accéléromètre et un contrôleur qui permettent d'asservir les vibrations.

Selon un mode de réalisation, l'étape de mesure de la réponse vibratoire comprend l'utilisation d'un moyen de mesure optique, tel qu'un vibromètre laser par effet Doppler.

Selon un mode de réalisation, l'étape de mesure de la réponse vibratoire est basée sur une mesure au cours du temps d'une amplitude ou d'une vitesse, ou encore d'une accélération de déplacement d'au moins un point de la pièce horlogère ou de joaillerie encore attachée au substrat support, effectuée de préférence au moins partiellement pendant l'étape d'excitation vibratoire.

Selon un mode de réalisation, l'étape de détermination d'au moins une caractéristique d'une fréquence de résonance comprend une étape de traitement du signal de mesure avec par exemple une transformée de Fourier, pour identifier des pics de résonance d'amplitude de déplacement ou de vitesse ou d'accélération, et/ou de phase, en fonction de la fréquence d'excitation.

Selon un mode de réalisation, la plage fréquentielle s'étend sur une plage de fréquence allant de 0 Hz à 500 kHz, et/ou de 0 Hz à 100 kHz, et/ou de 100 kHz à 200 kHz, et/ou de 200 kHz à 300 kHz, et/ou de 300 kHz à 400 kHz, et/ou de 400 kHz à 500 kHz, de préférence de 5 kHz à 150 kHz, plus préférentiellement de 5 kHz à 100 kHz, et très préférentiellement de 10 kHz à 80 kHz. La demanderesse s'est aperçue que la précision de la prédiction pouvait être meilleure pour les pics ou fréquences de résonance situées sur une plage de fréquences élevées.

Selon un mode de réalisation, l'étape d'application de l'excitation vibratoire est effectuée après l'arrêt d'une opération d'usinage de la pièce horlogère ou de joaillerie ayant partiellement libéré la pièce horlogère ou de joaillerie du substrat support. Autrement dit, l'excitation vibratoire et la mesure de la réponse vibratoire se font sur la pièce horlogère ou de joaillerie statique (hormis les vibrations imposées).

Selon un mode de réalisation, le procédé d'usinage comprend une étape consistant à envoyer à une unité de commande d'usinage, de préférence depuis la machine de prédiction d'usinage, les instructions pour réaliser une étape d'usinage déterminée ou modifiée et à effectuer pour terminer la pièce horlogère ou de joaillerie.

Selon un mode de réalisation, une mesure de température est effectuée sur la pièce horlogère ou de joaillerie, et la température est prise en compte par la machine de prédiction d'usinage pour déterminer ou modifier ladite au moins une étape d'usinage à effectuer avant de terminer la pièce horlogère ou de joaillerie. Une telle prise en compte de la température permet de bien s'adapter au processus d'usinage, au cours duquel la pièce horlogère ou de joaillerie peut s'échauffer et peut donc se dilater. La prise en compte de la température permet de garantir une bonne précision finale.

Selon un mode de réalisation, le procédé d'usinage comprend une étape consistant à mesurer une réponse vibratoire du substrat support, effectuée de préférence au moins partiellement simultanément à la mesure de la réponse vibratoire de la pièce horlogère ou de joaillerie encore attachée au substrat support, et la détermination de ladite au moins une caractéristique de résonance est effectuée en prenant en compte la réponse vibratoire du substrat support. En particulier, on peut prévoir de mesurer la réponse vibratoire du substrat support, pour pondérer la réponse de la pièce horlogère ou de joaillerie (on peut typiquement ou schématiquement soustraire la réponse vibratoire du substrat support de la réponse de la pièce horlogère ou de joaillerie). On peut par exemple vérifier que des pics vibratoires du substrat support ne viennent pas interférer avec ceux de la pièce horlogère, ou dimensionner ce substrat support pour que cela ne soit pas le cas

Selon un mode de réalisation, la mesure de la réponse vibratoire de la pièce horlogère ou de joaillerie encore attachée au substrat support est effectuée au moins partiellement au cours de ladite au moins une étape de découpe de matière effectuée par des moyens de coupe.

Selon un mode de réalisation, ladite au moins une étape de découpe de matière effectuée par des moyens de coupe est mise en oeuvre avec la pièce horlogère ou de joaillerie et le substrat support entraînés dans un mouvement d'usinage, et la mesure de la réponse vibratoire de la pièce horlogère ou de joaillerie comprend une opération d'échantillonnage pour mesurer de manière répétée un même point de la pièce horlogère ou de joaillerie passant de manière répétée devant un appareil de mesure de vibrations. On peut donc implémenter un décalage de mesure par effet stroboscopique pour mesurer de manière répétitive un point qui se déplace.

Selon un mode de réalisation, l'étape consistant à appliquer une excitation vibratoire à la pièce horlogère ou de joaillerie encore attachée au substrat support comprend ou est précédée par une étape consistant à :
- approcher, et/ou mettre en regard, et/ou accoler sur une surface de la pièce horlogère ou de joaillerie ou du substrat support, une source d'excitation vibratoire,
- approcher, et/ou mettre en regard, et/ou accoler sur une surface de la pièce horlogère ou de joaillerie ou du substrat support, un appareil de mesure de vibrations. Typiquement ces étapes d'approche et/ou de mise en regard peuvent être précédées ou suivies d'une gamme particulière dans la gamme d'usinage (par exemple retirer l'outil de coupe ou d'usinage, effectuer un rinçage spécifique, un soufflage de la pièce horlogère ou de joaillerie...).

Selon un mode de réalisation, l'étape d'excitation vibratoire est effectuée lorsqu'une portion libre de la pièce horlogère ou de joaillerie, présentant une épaisseur prédéterminée, est séparée d'une portion de pontage de la pièce horlogère ou de joaillerie attachée au substrat support par une distance d'au moins deux fois l'épaisseur prédéterminée, préférentiellement d'au moins trois fois l'épaisseur prédéterminée, plus préférentiellement d'au moins quatre fois l'épaisseur prédéterminée l'épaisseur prédéterminée. Autrement dit, l'étape d'excitation vibratoire n'est effectuée que lorsqu'au moins une partie de la pièce horlogère ou de joaillerie est suffisamment en porte-à-faux pour pouvoir être mise en vibration de manière significative.

Selon un mode de réalisation, l'étape de mesure de la réponse vibratoire est précédée par une étape consistant à nettoyer la pièce horlogère ou de joaillerie et mise en oeuvre par au moins l'une des étapes de :
- soufflage d'au moins une partie de la pièce horlogère ou de joaillerie,
- exposition d'au moins une partie de la pièce horlogère ou de joaillerie à une excitation vibratoire de nettoyage,
- séchage d'au moins une partie de la pièce horlogère ou de joaillerie,
- mise en mouvement de la pièce horlogère ou de joaillerie avec une vitesse supérieure à une vitesse d'égouttage.

Selon un mode de réalisation, le procédé est exempt de masquage ultérieur, autrement dit, le procédé d'usinage ne met pas en oeuvre une étape de photolithographie, et/ou ne met pas en oeuvre une étape de gravure ionique réactive profonde. Selon un mode de réalisation, l'opération subséquente comprend ou consiste en un enlèvement de copeau, ou un usinage mécanique. Selon un mode de réalisation, le procédé est exempt d'usinage chimique. Selon un mode de réalisation, la pièce horlogère ou de joaillerie est métallique. Selon un mode de réalisation, la pièce horlogère ou de joaillerie ne comprend pas ou ne consiste pas en un substrat silicium. Selon un mode de réalisation, le substrat support ou le support de base pour réaliser la pièce horlogère ou de joaillerie est une barre ou un barreau.

### Description des figures

D'autres caractéristiques et avantages de la présente invention apparaîtront plus clairement à la lecture de la description détaillée qui suit de mode(s) de réalisation de l'invention donné(s) à titre d'exemple(s) nullement limitatif(s) et illustré(s) par les dessins annexés, dans lesquels :
La figure 1 représente un exemple schématique d'usinage d'une pièce horlogère par enlèvement de copeaux, avec une étape d'excitation vibratoire de la pièce horlogère ;
la figure 2 représente un exemple de fréquences appliquées à la pièce horlogère de la figure 1, pour imposer une excitation vibratoire,
la figure 3 représente un exemple de mesure des amplitudes de déplacement d'un point d'une ébauche d'élément inertiel, en réponse à la plage fréquentielle imposée de la figure 2,
la figure 4 représente en détail un pic de résonance identifié à une fréquence particulière sur la figure 3,
la figure 5 représente des pics de résonance mesurés sur plusieurs pièces horlogères et superposés pour la fréquence particulière de la figure 4,
la figure 6 représente un exemple modèle de prédiction construit à partir de données extraites de la figure 5.

### Description détaillée de mode(s) de réalisation

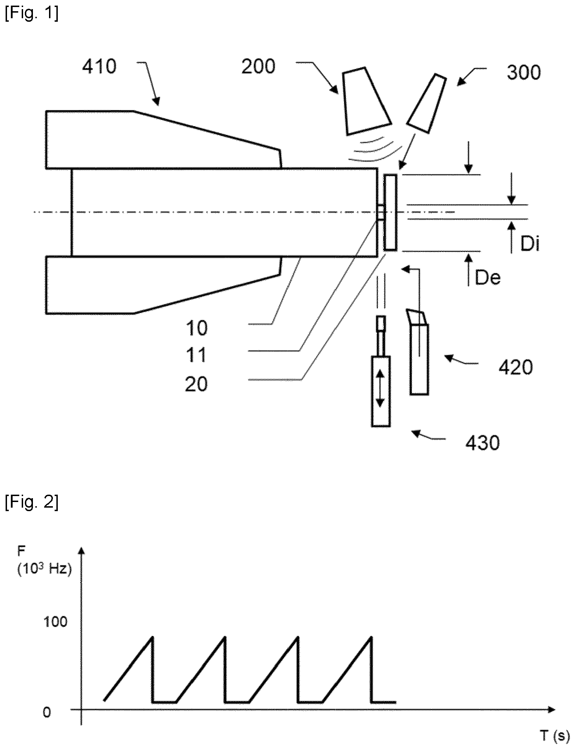

La figure 1 représente un exemple schématique d'une machine d'usinage d'une pièce horlogère 20 par enlèvement de copeaux, prévue pour effectuer en cours d'usinage une étape d'excitation vibratoire de la pièce horlogère 20. Dans l'exemple de la figure 1, la pièce horlogère 20 forme un balancier pour un oscillateur d'une pièce horlogère mécanique.

Un tel balancier est typiquement usiné par tournage ou décolletage. Un substrat support 10 formé par un barreau est bridé dans un outillage de bridage 410 de la machine d'usinage qui comprend aussi un premier outil d'usinage 420 et un deuxième outil d'usinage 430.

Par exemple, l'outillage de bridage 410 peut être un mandrin de tour, le premier outil d'usinage 420 peut être un outil de dressage-chariotage, et le deuxième outil d'usinage 430 peut être un outil de tronçonnage.

Typiquement, le premier outil d'usinage 420 peut présenter au minimum deux directions possibles de travail pour effectuer des opérations de chariotage et de dressage de surfaces extérieures du substrat support 10 mis en rotation par l'outillage de bridage 410, pour usiner la pièce horlogère 20. Par ailleurs, le deuxième outil d'usinage 430 peut présenter au moins une direction de travail pour séparer la pièce horlogère 20 du substrat support 10.

En tout état de cause, le premier outil d'usinage 420 et le deuxième outil d'usinage 430 sont des outils de coupe, prévus pour usiner le substrat support 10 par découpe de matière, en générant typiquement des copeaux.

Selon l'exemple de la figure 1, la pièce horlogère 20 peut présenter un diamètre final De et avant d'être complètement détachée, la pièce horlogère 20 peut être attachée au substrat support 10 par une portion d'attache 11 de diamètre Di.

La machine d'usinage comprend aussi une source d'excitation vibratoire 200 et un appareil de mesure de vibrations 300. Comme cela sera détaillé ci-dessous, la pièce horlogère 20 est encore attachée au substrat support 10 par une portion de diamètre Di, et il est possible de lui imposer une excitation vibratoire pour mesurer une réponse vibratoire et pour déduire une ou plusieurs caractéristiques de la pièce horlogère 20.

Dans l'exemple donné, la pièce horlogère 20 est un balancier d'oscillateur, et on peut par exemple décrire une excitation vibratoire pour déterminer une inertie du balancier encore attaché au substrat support 10. Cependant, on peut prévoir d'utiliser la méthode décrite pour déterminer des dimensions de la pièce horlogère 20 en cours d'usinage, ou encore si des défauts sont présents dans la pièce horlogère 20. On peut aussi bien entendu prévoir d'appliquer la méthode décrite à toute pièce horlogère ou de joaillerie encore attachée à un substrat support en cours d'usinage.

A cet effet, la source d'excitation vibratoire 200 peut être une source piézo-électrique (ou toute autre source d'excitation vibratoire - par exemple un électroaimant) permettant d'induire ou imposer une excitation vibratoire comme une excitation acoustique sur la pièce horlogère 20. La source d'excitation vibratoire 200 peut être prévue pour générer une fréquence d'excitation variable dans le temps pour couvrir une plage fréquentielle prédéterminée, allant par exemple de 0 à 500 kHz, de préférence de 0 à 100 kHz, de préférence de 5 kHz à 100 kHz, de préférence de 5kHz à 80 kHz, et de préférence de 10 kHz à 80 kHz. La totalité de la plage fréquentielle peut être balayée ou couverte dans un intervalle de temps pouvant aller d'une fraction de seconde à quelques secondes. Par exemple, on peut prévoir de balayer ou couvrir la plage de fréquences de la plage fréquentielle en moins de 0.5 s, moins de 1 s, ou moins de 1.5 s. Selon des variantes, la fréquence d'excitation peut changer de manière continue ou selon un profil variable.

Selon une variante, on peut utiliser un marteau d'excitation (ou toute autre source d'excitation vibratoire permettant d'induire une excitation vibratoire impulsionnelle, voire une excitation acoustique impulsionnelle) sur le substrat support 10 ou sur la pièce horlogère 20, qui donne une impulsion acoustique la plus courte possible (excitation impulsionnelle multi-fréquentielle). Dans cette variante, l'excitation est ponctuelle et non entretenue.

Par ailleurs, les mesures peuvent être effectuées en suivant un échantillonnage particulier, par exemple selon une gamme d'échantillonnage de 4, 2 ou 1 Hz. En effet, la résolution pour traiter les données d'acquisition selon par exemple une transformée de Fourier dépend directement de la durée et de la fréquence de cette acquisition.

Par ailleurs, on peut choisir une fréquence d'échantillonnage du signal d'au moins 200 kHz si la plage fréquentielle s'étend jusqu'à 100 kHz par exemple.

D'une manière générale, on peut prévoir enfin de changer la direction d'excitation, c'est-à-dire la direction des mouvements imposés par la source d'excitation vibratoire 200 (on peut imposer des vibrations selon une ou plusieurs direction(s), et faire évoluer cette ou ces direction(s) dans le temps).

Enfin, on peut prévoir d'accoupler la source acoustique à un cône divergent dirigé vers la pièce horlogère 20 à exciter, et de régler la source acoustique pour émettre un signal d'excitation avec une amplitude suffisante pour imposer une excitation vibratoire de la pièce horlogère 20 et ayant une amplitude suffisante pour être détectée et mesurée de manière précise par les instruments de mesure choisis.

Durant l'excitation, on peut mesurer et enregistrer, via un appareil de mesure de vibrations 300 adapté, l'amplitude et la phase (par rapport à la source d'excitation vibratoire) d'oscillation dans les 3 directions X, Y (dans le plan) et Z (hors plan) la pièce horlogère 20 excitée. De manière non limitative, on peut citer les moyens de mesures possibles suivants :
Méthodes optiques par interférométrie :
   - Par effet Doppler 3D (vibromètre laser par effet Doppler),
   - Holographique,
Méthodes optiques stroboscopiques,
Profilométrie confocale chromatique haute résolution temporelle,
Réflectométrie optique :
   - Analyse de vibration par déflection de faisceau sur détecteur multi-cadrans ou caméra,
   - Analyse par analyse temporelle type TCSPC,
   - Méthodes acoustiques par ultrason par effet Doppler.

La figure 2 représente un exemple d'excitation vibratoire au cours du temps. Dans l'exemple donné, la fréquence d'excitation varie au cours du temps, entre 0 Hz et 100 kHz, et on peut imposer une succession de fronts montants, chacun espacé d'une période de repos sans excitation. Pour chaque point de mesure sur la pièce horlogère 20, on peut imposer une pluralité de front montants (entre 2 fronts montants et 60 fronts montants), chacun durant entre 0.5 s et 2 s par exemple.

### Sélection de points de référence à mesurer

En ce qui concerne la mesure d'amplitude de déplacement, pendant une phase d'apprentissage, on peut prévoir une étape consistant à identifier des points de la pièce horlogère 20 pour lesquels la réponse vibratoire est significative. En effet, dans le cas d'une pièce horlogère 20 à laquelle une vibration est imposée, surtout si la fréquence varie au cours du temps, la réponse vibratoire peut faire apparaître sur la pièce horlogère 20 des noeuds, c'est-à-dire des points particuliers de la pièce horlogère 20 dont l'amplitude de déplacement est faible ou nulle. Si une mesure de déplacement est effectuée sur un point de la pièce horlogère 20 qui s'avère être un noeud à une ou plusieurs fréquence(s) particulière(s), l'identification de caractéristiques de fréquences de résonance sera affectée négativement.

Ainsi, il est avantageux de prévoir une étape préliminaire de mesure de déplacement sur une pluralité de points prédéterminés de la pièce horlogère 20, par exemple au moins une dizaine de points prédéterminés, de préférence au moins une vingtaine de points prédéterminés, et très préférentiellement au moins une trentaine de points prédéterminés.

A cet effet, on notera que la position relative entre la pièce horlogère 20 et la source d'excitation vibratoire 200 et/ou l'appareil de mesure de vibrations 300 sur la figure 1 est tout à fait schématique et arbitraire : on peut positionner la source d'excitation vibratoire 200 et/ou l'appareil de mesure de vibrations 300 à d'autres localisations.

A l'issue de cette étape préliminaire de mesure d'amplitude sur les points prédéterminés, on peut prévoir d'identifier pour chaque point de mesure des fréquences de résonance, et ensuite une étape de sélection de points de référence pour lesquels la mesure d'amplitude de déplacement au cours de l'excitation montre qu'ils ne sont pas des noeuds à ces fréquences de résonance. Autrement dit, les noeuds identifiés présentent, à au moins une fréquence de résonance, une amplitude de déplacement nulle ou inférieure à une première valeur de pic seuil, et ces points formant des noeuds sont écartés des points de référence à considérer pour les mesures ultérieures.

Aussi, les points de référence peuvent être choisis pour être éloignés de la partie ancrée de la pièce horlogère 20 sur le substrat support 10 et peuvent présenter naturellement une capacité de déplacement oscillatoire importante, ce qui assure une meilleure précision de la mesure de déplacement. De manière préférée, on peut choisir les points de référence en périphérie de la pièce horlogère 20 lorsque celle-ci est attachée au substrat support 10 par la portion d'attache 11 de la figure 1.

Par ailleurs, on peut aussi mesurer les déplacements d'un point du corps du substrat support 10, et/ou d'un point de la source d'excitation vibratoire et/ou de l'outillage de bridage 410, pour identifier ou mesurer par exemple un décalage de phase ou une atténuation vibratoire, ou encore une résonance issue d'un couplage vibratoire ou bien du substrat support 10. Ces mesures complémentaires permettent de s'assurer que les pics identifiés sont bien ceux de la pièce horlogère 20 seule. On peut également synchroniser la mesure d'amplitude de déplacement et l'excitation vibratoire.

### Détermination des caractéristiques vibratoires

On a alors plusieurs scénarios en fonction du domaine choisi préalablement pour l'excitation :
a. Mesures dans le domaine fréquentiel
   1 - variante avec excitation entretenue :
      i. Intégrer temporellement l'amplitude et la phase d'oscillation suffisamment longtemps pour avoir une bonne résolution spectrale à la fréquence d'excitation f₀,
      ii. Décaler la fréquence d'oscillation de delta f pour exciter à la fréquence f₀ + Δ f et répéter l'étape i d'intégration,
      ii.Reconstruire les spectres d'amplitude et de phase d'oscillation en fonction de la fréquence d'excitation (possiblement avec plusieurs pics à plusieurs fréquences).
   2- variante avec excitation dont la fréquence varie au cours du temps :
      i. Enregistrer temporellement l'amplitude et la phase d'oscillation au cours du balayage fréquentiel de la plage fréquentielle,
      ii. Réitérer l'étape i- au moins une fois, de préférence au moins trois fois,
      iii.Reconstruire les spectres d'amplitude et de phase d'oscillation en fonction de la fréquence d'excitation (possiblement avec plusieurs pics à plusieurs fréquences).
b. Mesures dans le domaine temporel :
   i. Enregistrer le déplacement temporel du point de mesure selon X, Y et Z sur une durée suffisamment longue de manière à obtenir un signal suffisamment représentatif, comme par exemple quelques secondes.
   ii. On peut choisir d'enregistrer le signal pour en faire un signal de référence à comparer avec d'autres signaux mesurés sur d'autres pièces. On peut aussi choisir de faire un traitement du signal de type transformée de Fourier pour identifier des fréquences de résonance dans le signal enregistré.

En conséquence, on peut identifier au moins un pic de résonance pour la pièce horlogère 20, et il est proposé de déterminer la fréquence de résonance non pas sur la base du sommet du pic de résonance, c'est-à-dire sur l'amplitude maximum, mais plutôt sur une zone de la courbe située entre 25% et 75% de la valeur d'amplitude maximale du pic de résonance, par exemple à partir de sa largeur à mi-hauteur. En effet, cette méthode de traitement qui se focalise sur une partie de la courbe entre 25% et 75% de la valeur d'amplitude maximale du pic de résonance permet de limiter les erreurs dues à la singularité du point d'amplitude maximum et aux calculs d'approximation pour reconstruire la partie sommitale du pic de résonance. La zone de la courbe située entre 25% et 75% de la valeur d'amplitude maximale du pic de résonance présente une meilleure précision que la partie supérieure à 75% (typiquement le pic), ce qui offre une meilleure précision sur la fréquence exacte de résonance déterminée. On peut prendre par exemple le milieu du segment reliant les deux points à mi-hauteur du pic de résonance pour déterminer la fréquence de résonance associée au pic en question.

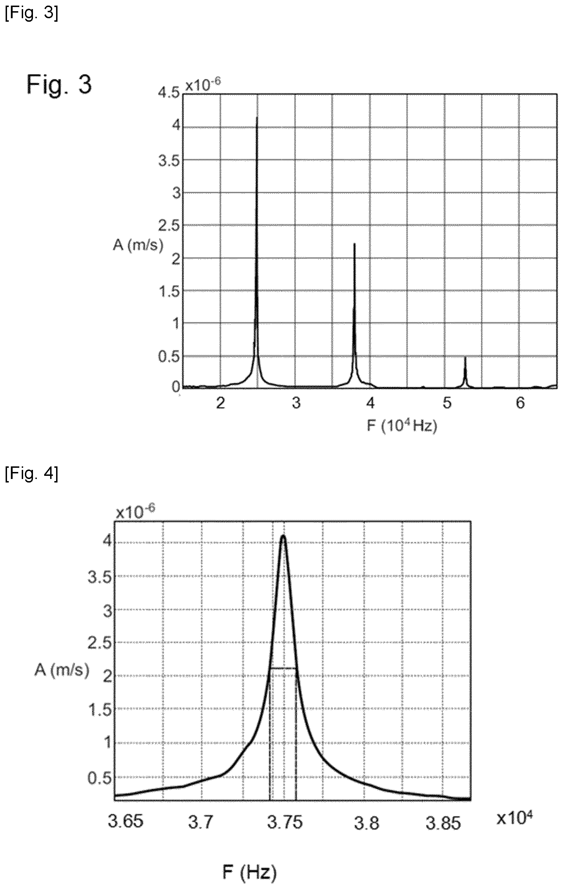

La figure 3 représente un exemple de spectre vibratoire pour un point de la pièce horlogère 20 de la figure 1, reconstruit à partir des mesures d'amplitude de déplacement d'un point de mesure en réponse à l'excitation vibratoire de la figure 2, entre 15 kHz et 65 kHz. On peut noter la présence de trois pics d'amplitude, à environ 25 kHz, 37 kHz, et 53 kHz. Bien que cela ne soit pas représenté, on peut typiquement identifier entre 10 et 30 pics d'amplitude si l'excitation vibratoire balaye une plage de fréquence comprise entre 0 Hz et 50 kHz. Chaque pic d'amplitude possède une fréquence de résonance, et les amplitudes maximales varient fortement.

La figure 4 représente en détail le traitement que l'on peut faire sur un pic d'amplitude, celui à 37.5 kHz par exemple. Le but est de trouver la fréquence de résonance et de lui donner une valeur aussi précise que possible. Au lieu de baser ce traitement sur la valeur maximale du pic, la demanderesse s'est aperçue qu'une meilleure précision pouvait être atteinte en déterminant la longueur du segment reliant la partie montante et la partie descendante de la courbe, à mi-hauteur du pic. La fréquence de résonance étant typiquement la valeur au milieu de ce segment. Cependant, on peut effectuer une interpolation sur des points au voisinage du pic de résonance pour améliorer la précision, et décaler le point choisi sur le segment, qui ne sera pas le milieu, en particulier si la position réelle du pic de résonance est décalée par exemple en raison de la fréquence d'échantillonnage choisie.

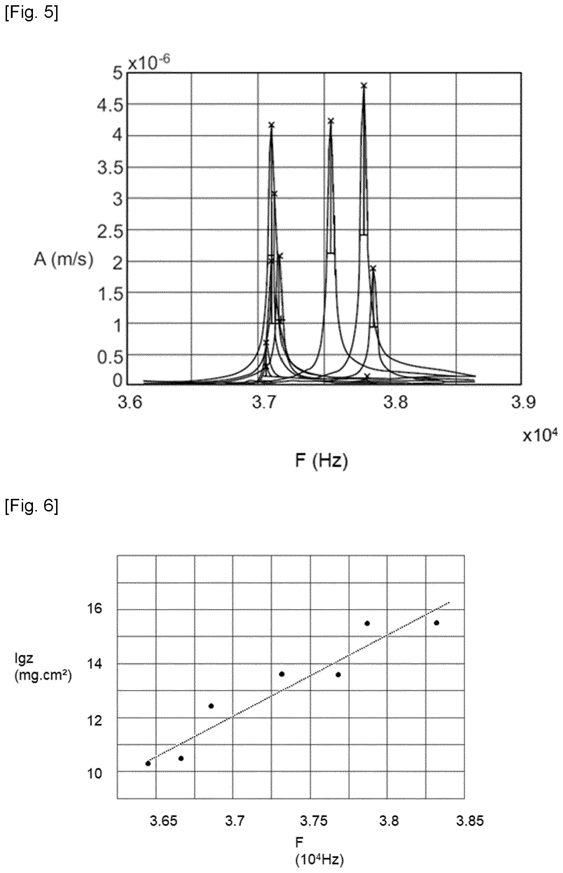

La figure 5 représente, pour l'exemple d'un pic d'amplitude à 37 kHz environ, les pics d'amplitudes construits pour une dizaine de pièces horlogères 20 testées. On peut noter que d'une pièce horlogère 20 à l'autre, la position en fréquence du pic d'amplitude varie (de 37 kHz à 38 kHz environ), et que l'amplitude maximale de déplacement varie dans un rapport de 1 à 5 environ. Les sommets de pics d'amplitude n'étant pas vraiment symétriques, il apparaît judicieux de déterminer la fréquence de résonance sur la base de la largeur du pic à mi-hauteur.

### Détermination de l'inertie et/ou des dimensions réelles des pièces horlogères 20 testées

Pour établir un modèle de prédiction qui puisse recevoir en entrée les caractéristiques vibratoires (typiquement une fréquence de résonance) et donner en sortie une inertie et/ou une dimension de la pièce horlogère 20, il faut, lors de la phase d'apprentissage, fournir les données relatives à l'inertie réelle et/ou les dimensions réelles de pièces horlogères 20 testées pour les relier aux fréquences de résonance de la figure 5 par exemple. Aussi, à cet effet et en ce qui concerne l'inertie, on peut prévoir de mesurer concrètement une fréquence propre d'oscillation d'un système spiral - balancier dans un environnement similaire à celui d'un mécanisme de montre particulier. En ce qui concerne les dimensions, on peut tout à fait effectuer des mesures dimensionnelles.

Selon une alternative, on peut finir de fabriquer les pièces horlogères 20 testées, afin de les monter ou les accoupler avec un organe élastique de rappel de référence (de raideur connue) de manière individuelle pour mesurer ici encore une fréquence propre d'oscillation du couple organe élastique de rappel de référence - élément inertiel.

On peut passer par une étape intermédiaire de détermination de l'inertie de chaque pièce horlogère 20, et ensuite déterminer l'inertie et/ou les dimensions réelles des pièces horlogères 20 testées. En d'autres termes, il est possible de déterminer la fréquence propre ou une fréquence de résonance et ensuite l'inertie ou les dimensions de la pièce horlogère 20 en analysant les oscillations libres d'un élément inertiel couplé à un organe élastique de rappel de référence. Dans cette approche, un laser pointé sur les bras du balancier enregistre les temps de passage des bras du balancier ou d'un détrompeur. On en déduit alors une estimation de la période, puis de la fréquence et enfin l'inertie et/ou les dimensions réelles. Les données recueillies sont essentiellement des nuages de points des instants de passage.

D'autre part, on peut prévoir d'estimer par simulation une fréquence propre et/ou une fréquence de résonance et/ou l'inertie pour chaque pièce horlogère 20. À cet effet, on peut effectuer des mesures dimensionnelles de chaque pièce horlogère 20 testée pour reconstruire par modélisation numérique la pièce en question afin de simuler par calcul numérique sa réponse vibratoire au spectre imposé, et de trouver par ailleurs l'inertie de la pièce horlogère 20.

Une approche par tomographie 3D par rayon X à haute résolution permettrait d'extraire des nuages de points donnant la densité de matière 3D de la pièce horlogère 20, et, moyennant une reconstruction des images adaptée, une cartographie de la section de la pièce horlogère 20. Ces différents types de données permettent de déduire les dimensions de la pièce horlogère 20 et d'estimer l'inertie de la pièce horlogère 20 par une approche géométrique combinée à une pesée et/ou en connaissant la densité du matériau de la pièce horlogère 20.

Une autre approche consiste à analyser les oscillations forcées d'une pièce horlogère 20 accouplée à un organe élastique de rappel de référence et à un échappement. Une mesure laser des temps de passage des bras du balancier (nuages de points), telle que présentée plus haut, permet de mesurer la fréquence et d'en déduire l'inertie. Une alternative peut être envisagée à partir d'une acquisition acoustique (micro de type Witschi) qui enregistre les chocs des différentes phases de fonctionnement du système échappement/ancre. Les données mesurées sont soit des nuages de points des instants de passage des bras du balancier, soit l'évolution temporelle du niveau de pression acoustique. Ces types de données expérimentales permettent de déduire la période, puis la fréquence, ensuite l'inertie et enfin les dimensions de la pièce horlogère 20.

### Établissement du modèle de prédiction

Lors de la phase d'apprentissage, les mesures d'amplitudes d'oscillations sont effectuées sur des pièces horlogères 20 physiques, et des fréquences de résonance sont identifiées (voir la figure 5 par exemple). Afin de pouvoir ultérieurement relier les fréquences de résonance mesurées sur des pièces horlogères 20 à des inerties et/ou des dimensions, il faut prévoir une phase de corrélation au cours de laquelle un modèle prédictif est construit.

Les opérations décrites ci-dessus (mesures vibratoire, identification des pics de résonance, largeur de bande à mi-hauteur et sa valeur milieu ou corrigée, détermination de l'inertie et/ou des dimensions de la pièce horlogère 20) permet d'alimenter une base de données pouvant mettre en relation des spectres ou périodes d'oscillation ou largeur de bande à mi-hauteur et sa valeur milieu ou corrigée avec les inerties et/ou dimensions effectives de la pièce horlogère 20.

Comme vu ci-dessus, cette base de données peut être construite à partir de simulations numériques sur un modèle par éléments finis de la pièce horlogère 20. Ces simulations permettent de générer des spectres ou périodes d'oscillation de références associés des inerties. Cette base de données peut également être complétée par des mesures expérimentales en mesurant des spectres de vibrations, périodes d'oscillation ainsi que leurs inerties associées. L'un des avantages de cette approche réside dans le fait que la base de données d'apprentissage s'enrichit au fur et à mesure des essais. Ceci peut permettre d'avoir un modèle adaptatif selon les usinages et peut contribuer à la réduction de l'écart-type en inertie et/ou en dimensions sur la fabrication par usinage.

Cette base de données peut servir à bâtir un modèle de prédiction, et plusieurs solutions sont offertes.

On peut construire un modèle numérique, par exemple polynomial, pour calculer, en fonction d'une valeur de fréquence de résonance, une dimension réelle ou une inertie réelle.

On peut aussi effectuer une catégorisation en effectuant un partitionnement en k-moyennes des données d'entrée (les résultats des mesures vibratoires, typiquement la fréquence des pics de résonance) et des données de sortie (l'inertie, et/ou les dimensions de la pièce horlogère 20) et de les relier entre elles pour établir une correspondance.

On peut également prévoir de traiter les images des pics de résonance par un réseau de neurones, par exemple un perceptron, pour effectuer une classification selon des inerties ou des dimensions des éléments inertiels, les classes pouvant être définies par des incréments de valeurs.

En résumé, la phase d'apprentissage comprend une phase de test (excitation de la pièce horlogère 20 avec mesure des caractéristiques vibratoires pour reconstruire un spectre vibratoire et identifier des fréquences de résonance). Une phase de mesure des inerties et/ou des dimensions de la pièce horlogère 20 est également effectuée. Une fois les données d'entrée (les fréquences de résonance) et les données de sortie (les inerties et/ou les dimensions de la pièce horlogère 20) pour un échantillon significatif disponible, la phase de construction du modèle de prédiction peut être effectuée.

On peut noter qu'il peut être avantageux de vérifier que le modèle de prédiction établi présente une bonne sensibilité, c'est-à-dire que pour deux valeurs d'entrées différentes, le modèle donne deux valeurs de sortie distinctes. La demanderesse s'est aperçue que la sensibilité du modèle de prédiction n'était pas la même pour tous les pics de résonance. En particulier, on peut se référer à la figure 6 qui représente une construction graphique de la formule de prédiction établie avec les données de la figure 5, où on peut noter un coefficient directeur est 0.0034 mg.cm²/Hz et une ordonnée à l'origine de -114.46 mg.cm² pour les pics de résonance situés autour de 37kHz.

D'une part, la demanderesse s'est aperçue que le coefficient directeur pouvait être plus grand pour les fréquences de résonance élevées, ce qui procure une meilleure sensibilité de prédiction, pour prédire des valeurs d'inertie ou des dimensions distinctes, même à partir de valeurs de fréquences de résonance proches. Il est avantageux de prévoir, lors de la phase d'apprentissage, une étape de comparaison de la sensibilité de la prédiction pour vérifier / confirmer qu'il est préférable de considérer et choisir certains pics de résonance aux fréquences élevées (par exemple au-delà de 10 kHz, de préférence au-delà de 20 kHz) pour prédire ensuite de manière la plus précise possible une inertie et/ou une correction dimensionnelle en fonction de la réponse vibratoire mesurée.

D'autre part, la demanderesse s'est aussi aperçue que même pour des fréquences de résonance proches, les modes de résonance (notamment les modes de déformation et/ou de déplacement des éléments inertiels) pouvaient différer de manière significative, ce qui peut également affecter la sensibilité de la prédiction d'inertie et/ou de correction dimensionnelle. Il est avantageux de prévoir, lors de la phase d'apprentissage, une étape de comparaison de la sensibilité de la prédiction pour choisir de considérer ultérieurement telle ou telle fréquence de résonance et pas une autre pour prédire de manière la plus précise possible une inertie et/ou une correction dimensionnelle en fonction de la réponse vibratoire.

Des remarques ci-dessus relatives à l'étude de la sensibilité de la prédiction, on peut prévoir, lors de la phase d'apprentissage, de classer les différents pics de résonance identifiés selon la sensibilité de prédiction de l'inertie et/ou de la dimension. On peut prévoir ensuite de définir la plage fréquentielle d'excitation (qui sera appliquée pendant une phase de prédiction pure) pour inclure au moins un ou plusieurs pics ou fréquences de résonance qui donne(nt) la meilleure sensibilité. Ainsi, imposer une excitation vibratoire variable sur la plage fréquentielle ainsi prédéterminée va garantir de pouvoir faire une prédiction précise pour le pic de résonance identifié ou des prédictions pour chacun des pics de résonance identifiés, qui se recoupent ou se confortent.

De manière générale, la phase d'apprentissage permet de choisir soit des pics de résonance aux fréquences élevées et/ou des pics de résonance qui correspondent à des modes de résonance particuliers permettant de prédire des valeurs précises et fiables, et la plage fréquentielle sera prédéterminée pour inclure au moins un pic de résonance et de préférence plusieurs, pour pouvoir faire soit une seule prédiction aussi précise que possible, soit plusieurs prédictions (une par pic de résonance jugé intéressant) pour effectuer ensuite des recoupements, des moyennes ou encore des recalages des valeurs prédites.

On peut par exemple prévoir de prédire plusieurs valeurs d'inertie ou de dimensions à partir de plusieurs pics ou fréquences de résonances, et ensuite calculer une valeur définitive, en effectuant, à partir des valeurs prédites, une moyenne pondérée en attribuant des poids à chaque valeur prédite, chaque poids étant déterminé en fonction de la sensibilité identifiée pour chaque pic ou fréquence de résonance correspondant(e).

Alternativement et de manière préférée, on peut prévoir de n'avoir qu'un seul modèle qui prend tous les pics ou fréquences de résonance en entrée et qui renvoie l'inertie ou la dimension, la phase d'apprentissage du modèle servant précisément à calculer les pondérations sur les pics ou fréquences de résonance d'entrée.

### Phase de prédiction

Une fois la phase d'apprentissage terminée, on peut passer à une phase de prédiction, par exemple lors d'un procédé de fabrication de la pièce horlogère 20.

On peut avantageusement effectuer le procédé au cours de l'usinage de la pièce horlogère 20 alors qu'elle est encore attachée substrat support 10, de sorte à estimer l'inertie et/ou les dimensions de la pièce horlogère 20, afin de déterminer comment terminer la fabrication et/ou l'usinage.

On peut noter que le fait de tester la pièce horlogère 20 alors qu'elle est encore attachée au substrat support 10 permet de profiter du fait que la pièce horlogère 20 est encastrée sur une portion centrale, si bien que la périphérie peut facilement entrer en vibration.

Typiquement, si l'inertie et/ou les dimensions prédites sont celles attendues à ce stade de la fabrication, on peut choisir de terminer la fabrication selon une gamme de fabrication attendue.

Si par contre, l'inertie et/ou les dimensions prédites ne sont pas celles attendues à ce stade de la fabrication, on peut choisir d'ajuster une opération ultérieure d'usinage pour arriver à l'inertie et/ou aux dimensions attendues.

On peut aussi prévoir de mettre la pièce horlogère 20 au rebut si l'inertie et/ou les dimensions prédites sont trop différentes de ce qui est attendu.

S'il est choisi d'ajuster une opération ultérieure d'usinage pour arriver à l'inertie et/ou aux dimensions attendues, on peut bien entendu prévoir de refaire un test vibratoire à l'issue de l'opération ultérieure d'usinage pour vérifier que le but est atteint.

On peut aussi prévoir de faire plusieurs phases d'excitation vibratoire, au fur et à mesure de l'usinage (et donc de la réduction) de la portion d'attache 11 : plus cette dernière est réduite, plus la pièce horlogère 20 peut aisément entrer en vibration.

Une fois le modèle entrainé, la procédure de fabrication à déployer peut être la suivante :
1) Usinage de la pièce horlogère 20 jusqu'à obtenir une configuration similaire à la figure 1 (la pièce horlogère 20 est partiellement usinée, mais encore attachée au substrat support 10), mesure vibratoire des spectres ou période d'oscillation (comme décrit plus haut),
2) Prédiction de l'inertie et/ou des dimensions de la pièce horlogère 20 par application du modèle prédictif,
3) Déterminer si l'inertie et/ou les dimensions prédites sont celles attendues à ce stade de la fabrication,
4) Terminer la pièce horlogère 20 selon une gamme de fabrication standard si tout est conforme à l'attendu, ou ajuster au moins une étape d'usinage ultérieur si une caractéristique n'est pas conforme à l'attendu, voire mettre la pièce horlogère 20 au rebut.

On peut envisager de mettre en oeuvre les point suivants :
- on peut prévoir une procédure de nettoyage particulière avant de faire l'excitation vibratoire (mise en rotation à haute vitesse, aspersion et/ou soufflage de la pièce horlogère 20) pour avoir une prédiction précise sur la pièce horlogère 20 exempte de copeau ou de fluide de coupe,
- on peut prévoir d'effectuer l'excitation vibratoire à plusieurs stades de la fabrication, la rapidité d'exécution de l'excitation vibratoire et de la mesure puis de la prédiction n'affectant pas significativement le temps total de fabrication,
- on peut prévoir de n'effectuer l'excitation vibratoire que lorsque la pièce horlogère 20 n'est plus attachée au substrat support 10 que par une portion d'attache 11 de faible dimension (par exemple Di < (De/2) ou Di < (De/3), ou encore Di < (De/4)...),
- on peut prévoir de n'effectuer l'excitation vibratoire à un stade de fabrication où la pièce horlogère 20 présente encore des dimensions supérieures à ses dimensions finales : il est alors aisé d'ajuster le reste de l'usinage pour corriger d'éventuelles dérives.

La méthode de fabrication, consistant à identifier des fréquences de résonance en imposant une excitation vibratoire sur la pièce horlogère encore attachée au substrat support 10 permet de rapidement obtenir des données de mesure avant même de terminer la pièce horlogère 20, sans devoir par exemple faire des opérations de montage avec un organe élastique de rappel, tout en limitant les erreurs de mesure car seule l'ébauche de la pièce horlogère 20 encore attachée au substrat support 10 est testée (il n'y a pas d'erreur pouvant être liée à l'organe élastique de rappel, comme sa raideur, sa position de montage, sa longueur libre, des pollutions etc.).

### Application industrielle

Une méthode de fabrication selon la présente invention est susceptible d'application industrielle.

On comprendra que diverses modifications et/ou améliorations évidentes pour l'homme du métier peuvent être apportées aux différents modes de réalisation de l'invention décrits dans la présente description sans sortir du cadre de l'invention.

En particulier, on peut noter la pièce horlogère 20 peut être une pièce de joaillerie, le procédé d'usinage peut être un précédé de fraisage, de découpe jet d'eau, découpe laser...

## Revendications

1. Procédé d'usinage d'une pièce horlogère ou de joaillerie (20) par découpe de matière, comprenant les étapes consistant à :
- se munir d'un substrat support (10),
- positionner ou brider le substrat support (10) dans une machine-outil,
- usiner au moins partiellement la pièce horlogère ou de joaillerie (20) dans le substrat support (10) avec au moins une étape de découpe de matière effectuée par des moyens de coupe,
- appliquer une excitation vibratoire à la pièce horlogère ou de joaillerie (20) encore attachée au substrat support (10),
- mesurer une réponse vibratoire de la pièce horlogère ou de joaillerie (20) encore attachée au substrat support (10), pour déterminer au moins une caractéristique d'une fréquence de résonance,
- fournir ladite au moins une caractéristique de fréquence de résonance à une machine de prédiction d'usinage pour déterminer ou modifier au moins une étape d'usinage à effectuer avant de terminer la pièce horlogère ou de joaillerie (20).

2. Procédé d'usinage selon la revendication 1, dans lequel ladite au moins une étape de découpe de matière effectuée par des moyens de coupe ou ladite au moins une étape d'usinage déterminée ou modifiée et à effectuer avant de terminer la pièce horlogère ou de joaillerie (20) est au moins l'une de :
- une étape de tournage ou de décolletage,
- une étape de fraisage,
- une étape de découpe laser,
- une étape de découpe jet d'eau,
- une étape de poinçonnage,
- une étape consistant à détacher la pièce horlogère ou de joaillerie (20) de son substrat support (10).

3. Procédé d'usinage selon l'une des revendications 1 ou 2, dans lequel la détermination ou la modification de ladite au moins une étape d'usinage à effectuer avant de terminer la pièce horlogère ou de joaillerie (20) comprend :
- la détermination d'une dimension finale à obtenir pour la pièce horlogère ou de joaillerie (20), et/ou
- la détermination d'une avance, ou d'une profondeur, ou d'une vitesse, d'usinage ou de coupe à appliquer pour terminer la pièce horlogère ou de joaillerie (20), et/ou
- la détermination d'une masse finale ou d'une inertie selon un axe spécifique à obtenir pour la pièce horlogère ou de joaillerie (20), et/ou
- la détermination d'une zone spécifique à usiner de la pièce horlogère ou de joaillerie (20), et/ou
- de manière complémentaire, la détermination d'un traitement à appliquer à la pièce horlogère ou de joaillerie (20), tel qu'un traitement par revêtement, un traitement chimique ou un traitement thermique, et/ou
- de manière complémentaire, la détermination d'une masse ou d'une dimension d'un insert ou d'un composant à joindre à la pièce horlogère ou de joaillerie (20).

4. Procédé d'usinage selon l'une des revendications 1 à 3, dans lequel l'excitation est une excitation vibratoire variable au cours du temps.

5. Procédé d'usinage selon l'une des revendications 1 à 4, dans lequel ladite au moins une caractéristique d'une fréquence de résonance est une fréquence d'un pic de résonance.

6. Procédé d'usinage selon l'une des revendications 1 à 5, dans lequel la pièce horlogère ou de joaillerie (20) encore attachée doit présenter au moins deux fréquences de résonance prédéterminées, et dans lequel l'excitation vibratoire appliquée à la pièce horlogère ou de joaillerie (20) est prévue pour recouvrir lesdites au moins deux fréquences de résonance prédéterminées.

7. Procédé d'usinage selon l'une des revendications 1 à 6, dans lequel l'étape d'application de l'excitation vibratoire est effectuée après l'arrêt d'une opération d'usinage de la pièce horlogère ou de joaillerie (20) ayant partiellement libéré la pièce horlogère ou de joaillerie (20) du substrat support (10).

8. Procédé d'usinage selon l'une des revendications 1 à 7, comprenant une étape consistant à envoyer à une unité de commande d'usinage, de préférence depuis la machine de prédiction d'usinage, les instructions pour réaliser une étape d'usinage déterminée ou modifiée et à effectuer pour terminer la pièce horlogère ou de joaillerie (20).

9. Procédé d'usinage selon l'une des revendications 1 à 8, dans lequel une mesure de température est effectuée sur la pièce horlogère ou de joaillerie (20), et dans lequel la température est prise en compte par la machine de prédiction d'usinage pour déterminer ou modifier ladite au moins une étape d'usinage à effectuer avant de terminer la pièce horlogère ou de joaillerie (20).

10. Procédé d'usinage selon l'une des revendications 1 à 9, comprenant une étape consistant à mesurer une réponse vibratoire du substrat support (10), effectuée de préférence au moins partiellement simultanément à la mesure de la réponse vibratoire de la pièce horlogère ou de joaillerie (20) encore attachée au substrat support (10), et dans lequel la détermination de ladite au moins une caractéristique de résonance est effectuée en prenant en compte la réponse vibratoire du substrat support (10).

11. Procédé d'usinage selon l'une des revendications 1 à 10, dans lequel la mesure de la réponse vibratoire de la pièce horlogère ou de joaillerie (20) encore attachée au substrat support (10) est effectuée au moins partiellement au cours de ladite au moins une étape de découpe de matière effectuée par des moyens de coupe.

12. Procédé d'usinage selon la revendication 11, dans lequel ladite au moins une étape de découpe de matière effectuée par des moyens de coupe est mise en oeuvre avec la pièce horlogère ou de joaillerie (20) et le substrat support (10) entraînés dans un mouvement d'usinage, et dans lequel la mesure de la réponse vibratoire de la pièce horlogère ou de joaillerie (20) comprend une opération d'échantillonnage pour mesurer de manière répétée un même point de la pièce horlogère ou de joaillerie (20) passant de manière répétée devant un appareil de mesure de vibrations.

13. Procédé d'usinage selon l'une des revendications 1 à 12, dans lequel l'étape consistant à appliquer une excitation vibratoire à la pièce horlogère ou de joaillerie (20) encore attachée au substrat support (10) comprend ou est précédée par une étape consistant à :
- approcher, et/ou mettre en regard, et/ou accoler sur une surface de la pièce horlogère ou de joaillerie (20) ou du substrat support (10), une source d'excitation vibratoire,
- approcher, et/ou mettre en regard, et/ou accoler sur une surface de la pièce horlogère ou de joaillerie (20) ou du substrat support (10), un appareil de mesure de vibrations.

14. Procédé d'usinage selon l'une des revendications 1 à 13, dans lequel l'étape d'excitation vibratoire est effectuée lorsqu'une portion libre de la pièce horlogère ou de joaillerie (20), présentant une épaisseur prédéterminée, est séparée d'une portion de pontage de la pièce horlogère ou de joaillerie (20) attachée au substrat support (10) par une distance d'au moins deux fois l'épaisseur prédéterminée, préférentiellement d'au moins trois fois l'épaisseur prédéterminée, plus préférentiellement d'au moins quatre fois l'épaisseur prédéterminée l'épaisseur prédéterminée.

15. Procédé d'usinage selon l'une des revendications 1 à 14, dans lequel l'étape de mesure de la réponse vibratoire est précédée par une étape consistant à nettoyer la pièce horlogère ou de joaillerie (20) par au moins l'une des étapes de :
- soufflage d'au moins une partie de la pièce horlogère ou de joaillerie (20),
- exposition d'au moins une partie de la pièce horlogère ou de joaillerie (20) à une excitation vibratoire de nettoyage,
- séchage d'au moins une partie de la pièce horlogère ou de joaillerie (20),
- mise en mouvement de la pièce horlogère ou de joaillerie (20) avec une vitesse supérieure à une vitesse d'égouttage.
